# EUROPEAN PATENT SPECIFICATION

(11) **EP 0 580 597 B1**
(45) Date of publication and mention of the grant of the patent: **21.05.1997**
(21) Application number: 92905524.2
(22) Date of filing: 21.10.1991
(51) Int. Cl.: B23F 23/12, B23C 5/26

(54) **ROTARY RING CUTTER**
Rotierendes ringförminges Schneidewerkzeug
FRAISE ANNULAIRE ROTATIVE

(30) Priority: 11.04.1991 US 684538; 27.08.1991 US 750346
(43) Date of publication of application: 02.02.1994
(73) Proprietor: THE GLEASON WORKS, Rochester New York 14692 (US)
(72) Inventor: BALL, Robert, J., Plymouth, Devon (GB); KLEINSTUBER, Keith Frederick, West Charleton, Kingsbridge, Devon (GB); PEARSON, Harry, Bishopsmead, Tavistock, Devon (GB)
(74) Representative: Harrison, David Christopher
(86) International application number: US9107856
(87) International publication number: WO9218281

(56) References cited:
- US-A- 2 828 672
- US-A- 3 138 996
- PATENT ABSTRACTS OF JAPAN vol. 8, no. 83 (M-290)(1520) 17 April 1984

## Description

The present invention is directed to rotary cutters, particularly ring cutters, utilized in the processes of cutting gears, couplings and the like according to the precharacterising portion of claim 1; see PATENT ABSTRACTS OF JAPAN, vol. 8, no. 83 (M-290)(1520), 17.04.84; & JP-A-59 001 111.

Solid ring cutters have been known for many years in the art of milling and, in particular, gear cutting. US-A-2,129,077 to Wildhaber discloses a solid ring cutter mounted to the nose of a cutter spindle. The solid ring cutter is stated to be very stiff due to the continuous ring and accurately concentric due to the fact that the teeth are ground in place.

It can be seen that producing the teeth of the ring cutter in place is advantageous since this approach eliminates the need to assemble a cutter by placing and positioning individual blades in a cutter head, such as illustrated by US-A-4,575,286 to Blakesley, or mounting blades about the periphery of a cutter head, such as illustrated by US-A-2,994,943 to Carlsen et al. or 3,138,996 to Dammert et al.

However, mounting a cutter ring on a spindle as disclosed by previously mentioned US-A-2,129,077 or mounting a cutter ring on a cutter head as disclosed by US-A-2,828,672 to McMullen or 4,204,787 to McCray et al. requires a precise fit of the cutter ring base and side mounting surfaces to the mounting surfaces of the spindle or head. Any dimensional changes of the cutter ring, such as diameter changes due to temperature variations, will result in the cutter ring and the surface to which it is to be mounted to lose the precise fit required for proper operation of the cutter. Proper operation being the ability of the cutter ring to rotate true about the axis of rotation of the spindle. A cutter ring produced at one temperature and then transported to another location having a different temperature will expand or contract accordingly. The diameter of the cutting ring will not be the same as when produced and will not precisely fit the intended mounting surface.

Producing the cutter ring and mounting surface under the same conditions does not solve the imprecise fit condition since usually the cutter ring is made from a cutting tool steel and the head to which it is to be mounted is made from a non-cutting tool steel. These materials most likely will not expand nor contract equally and therefore exposing the cutter ring and mounting surface to a temperature different than that at production will also ruin the precise fit of the cutter ring on the mounting surface.

It is an object of the present invention to provide a rotary ring cutter wherein the cutter ring will be concentric with the axis of rotation of the rotary cutter regardless of dimensional changes effected by exposure of the cutter ring to differing environmental conditions.

It is another object of the present invention to provide a rotary ring cutter which offers rapid assembly and disassembly as well as repeatable accurate placement of a cutter ring on the cutter head.

These objects are achieved with a rotary cutter having the features of claim 1.

The present invention is directed to rotary cutters for cutting gears, couplings and the like such as by milling, hobbing or grinding, and in particular to rotary cutters such as in US-A-2828672 having a solid, one-piece cutter ring comprising a circular base portion with at least one stock removing surface located thereon and a disc-shaped cutter head having an outer edge surface and first and second sides located, respectively, on the front and back faces of the cutter head. The cutter head has a central opening therethrough which may be concentric with the axis of rotation of the rotary cutter.

According to the invention, and to enable the cutter ring to be centered on a cutter head and to thereby rotate true in both the radial and axial planes about an axis of rotation during a gear forming process, extending about the outer surface of the projecting portion is a ball and cage arrangement.

A disc-shaped centering disc is located adjacent the first side of the cutter head. The centering disc has a central opening therethrough which may be concentric with the axis of rotation. The centering disc also comprises a recessed region having a circular inner recess wall surface encircling the central opening of the centering disc. The circular inner recess wall surface is concentric with the axis of rotation of the rotary cutter and is located about and in an interference fit with the ball and cage arrangement thus centering the centering disc on the cutter head. The centering disc includes a tapered outer edge surface which is concentric with the circular inner recess wall surface.

A cutter ring having stock removing surfaces is secured to the cutter head. The stock removing surfaces are located on a circular base portion wherein the base portion comprises a base surface adjacent to the first side of the cutter head, an outer ring surface located near the outer edge surface of the cutter head and a tapered inner cutter ring surface. The inner ring surface is complementary to the tapered surface of the centering disc whereby placement of the cutter ring on the centering disc centers the cutter ring on the cutter head.

In the drawings:
Figure 1 schematically illustrates a preferred embodiment of the present invention wherein an outwardly tapering centering disc is utilized to center a cutter ring having an outwardly tapering inside ring surface.
Figure 2 illustrates a retaining means for maintaining a ball and cage arrangement in place in the centering disc.
Figure 3 illustrates a retaining means for maintaining a ball and cage arrangement in place about the projecting portion of the cutter head.
Figure 4 shows a ball and cage arrangement having an lengthened cage portion to prevent the loss of contact with the projecting portion.
Figure 5 illustrates an alternative embodiment of the present invention whereby an inwardly tapering centering disc is utilized to center a cutter ring having an inwardly tapering inside ring surface.
Figure 6 schematically illustrates an alternative means for securing the cutter ring to the cutter head comprising means extending angularly through the base portion of the cutter ring and engaging the cutter head.
Figure 7 schematically illustrates an alternative means for clamping the cutter ring to the cutter head comprising tabs or a continuous flange extending radially outwardly from the base portion and having a planar upper surface extending substantially parallel to the base surface of the cutter ring with securing means extending through the tabs or continuous flange into the cutter head.
Figure 8 schematically illustrates an alternative means for clamping the cutter ring to the cutter head comprising tabs or a continuous flange extending radially outwardly from the base portion and having a planar upper surface inclined angularly with respect to the base surface of the cutter ring with securing means extending through the tabs or continuous flange into the cutter head.
Figure 9 illustrates an alternative means for securing the angular surface tabs or continuous flange of a cutter ring to a cutter head comprising clamps having angular clamping surfaces complementary to the surfaces of the tabs or flange.
Figure 10 illustrates an alternative means for securing the tabs or continuous flange of a cutter ring, having a clamping surface parallel to the cutter ring base surface, to a cutter head with the securing means comprising clamps having clamping surfaces complementary to the surfaces of the tabs or flange.
Figure 11 illustrates a clamping ring or one of a plurality of clamps for securing the tabs or continuous flange of a cutter ring, having an angled clamping surface, to a cutter head.
Figure 12 illustrates a clamping ring or one of a plurality of clamps for securing the tabs or continuous flange of a cutter ring, having a clamping surface parallel to the cutter ring base surface, to a cutter head.

The present invention will be discussed with reference to the accompanying Drawings which represent the invention by way of example only.

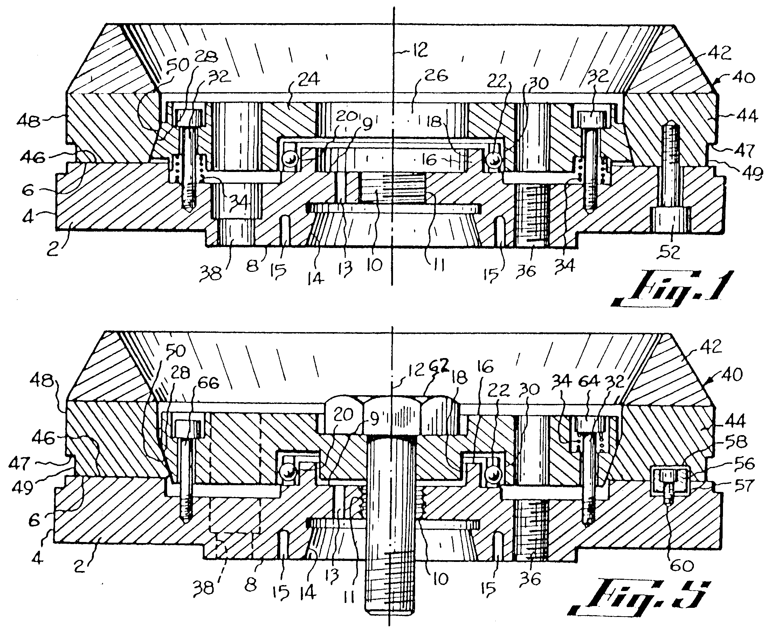

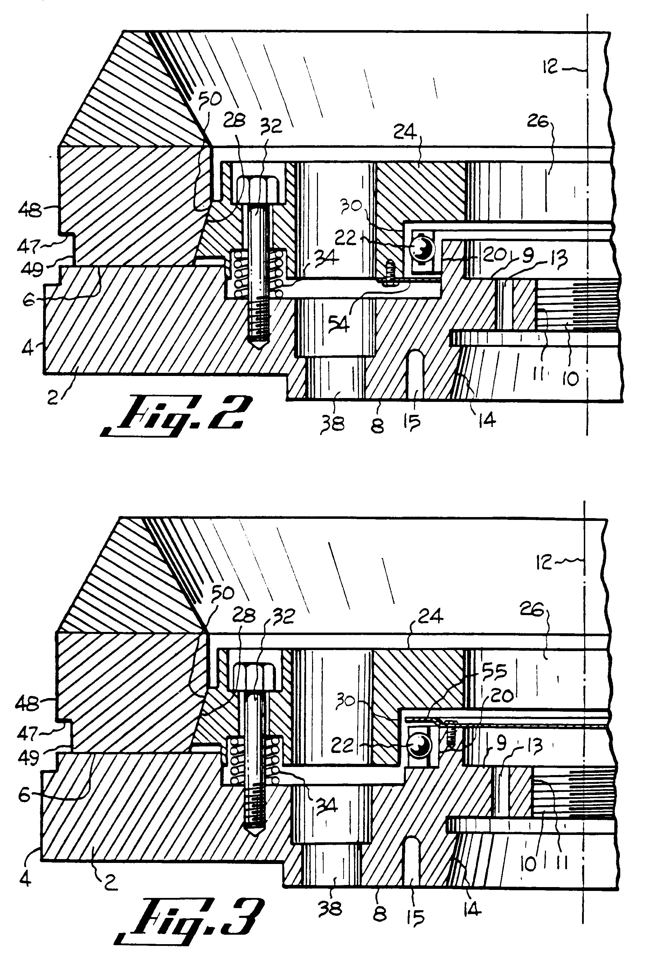

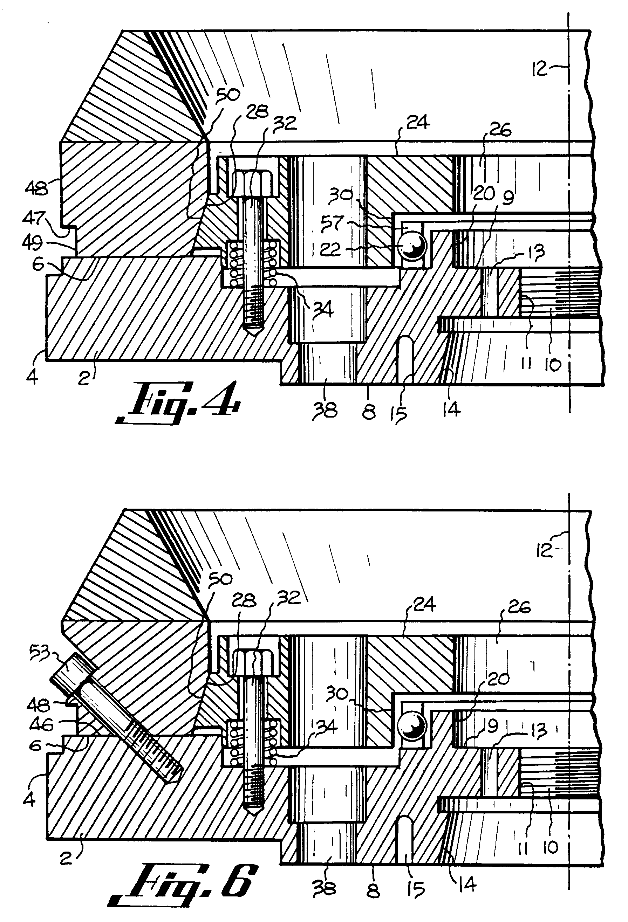

Figure 1 illustrates a cross-sectional view of a preferred embodiment of the present invention. The rotary cutter may be utilized for roughing and/or finishing operations and comprises a disc-shaped cutter head 2, preferably made of a non-tool steel, comprising an edge surface 4 and including a first side 6 and a second side 8 with sides 6 and 8 being parallel to one another. The cutter head 2 also comprises a central opening 10 arranged about an axis 12 which is the axis of rotation of the rotary cutter. Central opening 10 may be arranged concentrically with axis 12. The axis 12 coincides with the axis of rotation of a machine tool spindle (not shown) to which the rotary cutter is to be mounted. In mounting the rotary cutter to a machine tool spindle, the tapered bore 14, which is concentric to axis 12, engages the machine tool spindle nose and the second side 8 abuts against the face of the spindle such that second side 8 is perpendicular to the axis 12. The spindle face may include a key which is inserted into a keyway (not shown) in the surface 8 to assist in the transmittal of torque from the spindle face to the cutter head 2. A bolt (not shown) extends from seating surface 9 through central opening 10 and is threaded into the end of the spindle nose. Cutter head 2 may include a stress-relieving groove 15 located in the second side 8 and extending about and radially outward from the tapered bore 14. The groove 15 reduces the stresses associated with securing the cutter head to the machine spindle and in doing so reduces the wear of the tapered bore 14. The cutter head 2 also includes a projecting portion 16 encircling the opening 10 and axis 12. The projecting portion 16 has an inner surface 18 and an outer surface 20 with at least the outer surface 20 being perpendicular to side 6 and concentric with the axis 12. Extending about projecting portion 16 is a ball and cage arrangement 22 having uniformly sized balls of a predetermined diameter, for example, about 0.65 cm (one fourth (¼) inch). Although Figure 1 shows one row of balls in the ball and cage arrangement 22 it is to be understood that more than one row of balls may be utilized.

Located adjacent to the first side 6 of cutter head 2 is disc-shaped centering disc 24 which along with the cutter head 2 comprises a mounting assembly for a cutter ring. The disc-shaped centering disc 24, also preferably made of a non-tool steel, comprises a central opening 26 which may be concentric with axis 12, tapered outer edge surface 28 and a circular recessed region having a circular inner recess wall surface 30. Wall surface 30 and outer edge surface 28 are located concentrically about axis 12.

Surfaces 20, 28, and 30 are precisely manufactured, for example, by grinding, such that placement of the ball and cage arrangement 22 about outer surface 20 followed by placement of circular inner recess wall surface 30 about ball and cage 22 will create an interference fit thereby precisely positioning ball and cage 22 concentric with projecting portion 16 and centering the disc 24 on cutter head 2. Means, such as shoulder screws 32, spaced around centering disc 24 hold, but do not clamp, centering disc 24 and cutter head 2 together.

Located between the centering disc 24 and cutter head 2 are resilient means, such as springs 34, which resiliently urge centering disc 24 spaced away from cutter head 2. Preferably the springs 34 are located at the same locations as shoulder screws 32 with the screws 32 passing therethrough.

Also spaced about the centering disc 24 and extending therethrough as well as through the cutter head 2 is at least one access hole 36 for placement of an ejector screw (not shown), for removing the rotary cutter from a machine tool spindle. The portion of the access hole 36 which extends through cutter head 2 is tapped in order that the ejector screw may be threaded thereinto. Alternatively, for machines having a narrow spindle face, central opening 10 may include threads 11 for an ejector screw. Also, at least one other access hole 38 may be included for alternative or additional mounting bolts (not shown) for securing the rotary cutter to the spindle of a machine tool.

Secured and centered on cutter head is cutter ring 40. Cutter ring 40 comprises at least one stock removing surface 42, such as a grinding surface made of, for example, aluminum oxide or cubic boron nitride (CBN), or cutting blades made of, for example, high speed steel, powder metal, carbides or ceramics. The stock removing surface 42 may be removably attached to circular base portion 44 made of, for example, high speed steel or the stock removing surface 42 and circular base portion 44 may be formed as a singular unit such as by casting or milling from a solid piece of metal. The base portion 44 includes a base surface 46, outside ring surface 48 and tapered inside ring surface 50. The tapered inside ring surface 50 of cutter ring 40 abuts against and is complementary with the tapered outer edge surface 28 of centering disc 24. The amount of taper of the inside ring surface 50 and the outer edge surface 28 being about two (2) degrees to about twenty (20) degrees. In Figure 1 tapered inside ring surface 50 is tapered outwardly in a direction toward surface 6 of cutter head 2 and tapered outer edge surface 28 is tapered outwardly in a direction toward surface 6 of cutter head 2.

Surfaces 47 and 49 are known as proof surfaces and extend, respectively, perpendicular and parallel to the axis of rotation 12 of the cutter ring 40. The proof surfaces are precisely formed on the cutter ring and extend completely therearound. These surfaces are used during the manufacture of the cutter ring 40 to ensure that the cutter ring is correctly loaded onto the heads of machines utilized to produce them. Any foreign material, such as dirt, between the cutter ring and the machine head or any damage to the ring will cause run-out in the rotation of the cutter ring, that is, the cutter ring will not rotate concentrically about its axis of rotation. Gauges (not shown) contacting proof surfaces 47 and 49 indicate any deviations from concentricity about the axis of rotation during the manufacture of the cutter ring 40. The proof surfaces 47 and 49 may also be used after assembly of the ring cutter or after the ring cutter is mounted to the spindle of a machine tool in order to check for deviations from concentricity. As with manufacture, dirt located between adjacent mounting surfaces or damage to the mounting surfaces may cause the cutter ring 40 to depart from concentricity about the axis of rotation 12.

When cutter ring 40 is placed on centering disc 24, the ring 40 will position itself complementary to the precisely formed, tapered outer edge 28 of centering disc 24 at some location along outer edge 28 depending upon the diameter of the cutter ring 40. A smaller diameter will result in the cutter ring 40 being positioned nearer the top (referenced from cutter head 2 in Figure 1) of outer edge surface 28 while a larger diameter will result in the cutter ring 40 being positioned nearer to the bottom of outer surface 28. Stated another way, a smaller diameter cutter ring, when centered on centering disc 24, will have a base surface 46 spaced further away from the first side 6 of cutter head 2 than a larger diameter cutter ring which, when centered, will have a base surface located closer to the first side 6 of cutter head 2. It can be clearly seen, therefore, that regardless of the diameter variation of cutter ring 40, the cutter ring will always be centered by centering disc 24 and in turn centered on cutter head 2 thus resulting in true rotation about axis 12.

The resilient means, such as the springs 34, hold the centering disc 24 away from the cutter head 2 thus allowing the cutter ring 40 to find a centered position without interference from the cutter head 2. Once centered by the centering disc 24 on cutter head 2, means, such as at least one screw 52 spaced about the cutter head 2, are utilized to secure the cutter ring 40 to the cutter head 2. The screws 52 extend through the cutter head 2 into the base portion 44 of the cutter ring 40. Wide bores in the cutter head 2 and wide, deep threads in the screws 52 and base portion 44 allow for radial position changes of the cutter ring 40 on the cutter head 2 due to dimensional changes of the cutter ring 40.

Surfaces 6, 8 and 46 are precisely formed, such as by grinding, to be perpendicular to the axis 12 and the face of a machine tool spindle so that when cutter ring 40 is secured to cutter head 2 by screws 52 and mounted to a machine tool spindle, the rotary cutter will rotate true in the axial plane of a machine tool spindle axis. Since the cutter ring 40 is also centered on the cutter head 2 the rotary cutter will also rotate true in the radial plane of the machine tool spindle axis. Changes in the cutter ring diameter due to temperature variations, such as manufacturing the cutter ring in a cool environment and utilizing it in a hot environment, will be accommodated for by the centering disc 24 thus ensuring precise centering of the cutter ring 40 on the cutter head 2 and true rotation about axis 12.

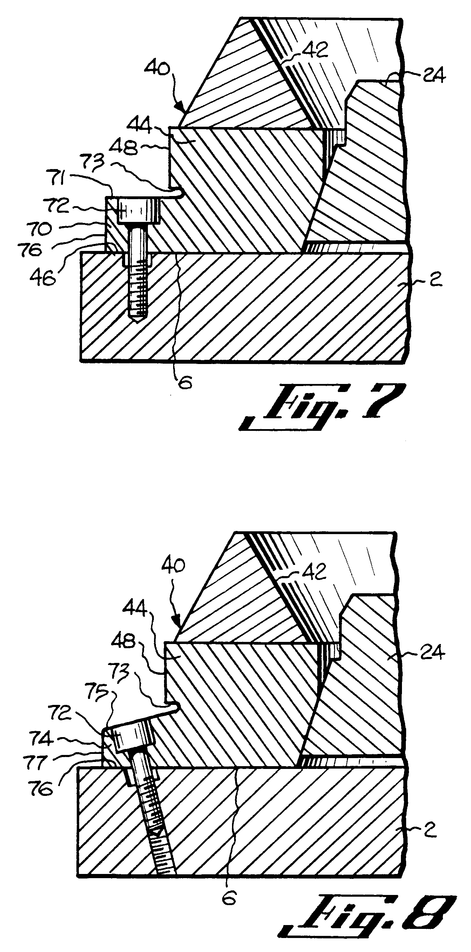

The rotary cutter of Figure 1 is assembled by placing the ball and cage arrangement 22 about projecting portion 16. Alternatively, the ball and cage arrangement 22 may be placed in the centering disc 24 next to surface 30. This alternative positioning (See Figure 2) usually requires at least one retaining means, such as a thin metal strip 54, to be placed on the centering disc 24. Figure 2 has been enlarged to show detail. The retaining means extends inwardly past the inner recess wall surface 30 in order to retain ball and cage arrangement 22 in contact with wall surface 30 prior to assembly of the rotary cutter. The metal strip 54 may also be in the form of a continuous ring-shaped strip completely encircling and extending inwardly of the inner recess wall portion 30. The centering disc 24 is then placed on the head 2 and held spaced from the head 2 by the screws 32 and springs 34. The cutter ring 40 is then placed on the centering disc 24 and secured to the cutter head 2 by the screws 52. In most cases, when screws 52 are tightened, the rotary cutter must be turned upside down in order to access the heads of the screws 52 on the opposite side of the cutter head 2. Usually, the seating surface 9 of the rotary cutter is placed against the face of a spindle-like device (not shown) that comprises a material, such as rubber, that will not mar the surfaces of the rotary cutter. Projecting from the face of the spindle-like device is a pin (not shown) which is inserted into the hole 13. The presence of the pin in the hole 13 prevents the rotary cutter from rotating as the screws 52 are tightened.

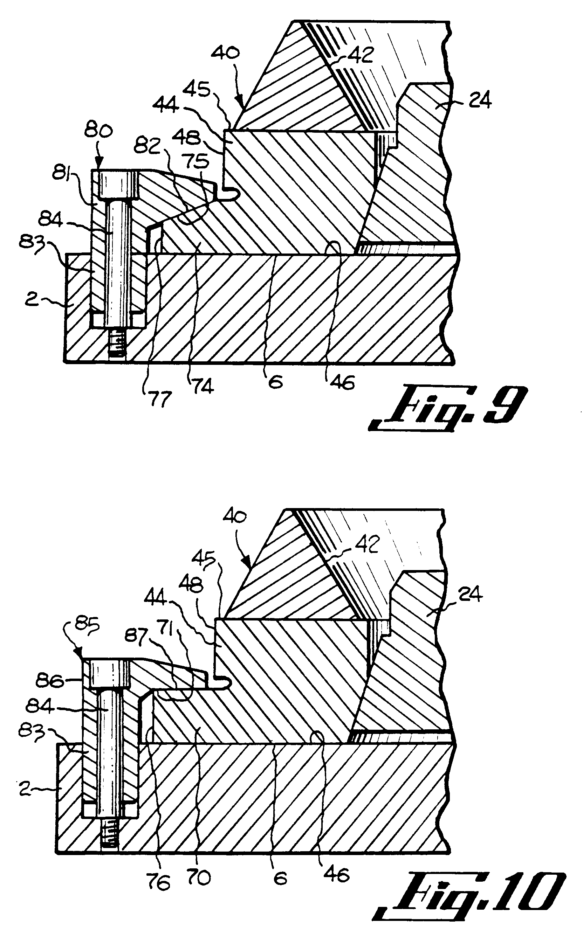

When the ball and cage arrangement 22 is placed about the projecting portion 16, retaining means may be included to prevent the ball and cage arrangement 22 from losing contact with the projecting portion 16 upon the removal of the centering disc 24 from the cutter head 2. One type of retaining means is shown in Figure 3 which has been enlarged to show detail. A retaining strip 55, such as a thin metal strip, is secured to the projecting portion 16 to prevent movement of the ball and cage 22 beyond the end of the projecting portion 16.

Alternatively, as shown in Figure 4, the portion 57 of the cage, in the ball and cage arrangement 22, between the balls and centering disc 24 may be lengthened, that is, made longer than the portion of the cage located between the balls and the cutter head 2. This ensures that movement of the ball and cage 22 will not result in the ball and cage losing contact with the projecting portion 16 such as when the cutter ring 40 is replaced. Continual removal and replacement of cutter rings results in the centering disc 24 repeatedly moving away from and then toward the cutter head 2. In some instances, without a retaining means present, there is a tendency of the ball and cage arrangement 22 to creep along the projecting portion 16 and eventually lose contact therewith. Lengthening the cage portion 57 allows the ball and cage arrangement 22 to move only a short distance until the end surface of the lengthened portion 57 contacts the centering disc 24 thus preventing any further movement and keeping the ball and cage 22 in contact with the projecting portion 16. In a similar manner, the thin strip 55 as shown in Figure 3 would also prevent any excessive creeping of the ball and cage arrangement 22 along the projecting portion 16.

The ball and cage arrangement 22 of the present invention may also include at least one resilient means, such as at least one spring, to urge the ball and cage away from the centering disc 24 or away from the cutter head 2, depending upon the preassembly location, when the centering disc 24 is not in contact with the cutter head 2. The resilient means may be utilized with or without the retaining means 54, 55 or 57. In this manner, as the centering disc 24 is placed on the cutter head 2 and/or the cutter ring 40 is drawn down onto the first side 6 of the cutter head 2, such as by the screws 52, the centering disc 24 will roll down with the ball and cage 22 thus preventing skidding of the balls and marking of the surfaces 20 and/or 30.

An alternative embodiment of the present invention is shown in Figure 5 wherein elements similar to those previously discussed with reference to Figure 1 are indicated with the same reference numbers.

In Figure 5 the directions of the taper on the centering disc 24 and the cutter ring 40 are reversed from the direction as described in Figure 1. The outer edge surface 28 of centering disc 24 tapers inwardly in a direction toward surface 6 of the cutter head 2 while the inside ring surface 50 of cutter ring 40 also tapers inwardly in a direction toward surface 6 of the cutter head 2. Means, such as shoulder screw 32, hold the cutter head 2 to the centering disc 24. However, in this embodiment, resilient means, such as springs 34, are located between the head 64 of screw 32 and the centering disc 24 thus urging the centering disc toward the cutter head 2. The force of the springs 34 urges centering disc 24 toward the cutter head 2 until the tapered surfaces of the centering disc 24 and the cutter ring 40 are complementary at which point the cutter ring 40 will be centered on the cutter head 2.

In the embodiment of Figure 5 the cutter ring 40 is secured to the cutter head 2 by the force exerted by the center bolt 62 which also serves to mount the rotary cutter to the spindle of a gear cutting machine. If desired, at least one additional securing means, such as screw 66, may be spaced about and extend through the centering disc 24 into the cutter head 2. Alternatively, screws extending through the cutter head 2 and into the base portion 44 of the cutter ring 40, as shown by 52 in Figure 1, may also be utilized as additional securing means.

To radially align cutter ring 40 on cutter head 2 and to assist in the transmittal of torque from cutter head 2 to the cutter ring 40, a key and keyway arrangement may be utilized. In Figure 5 this arrangement is shown by a key 56 which is located in a keyway 57 formed in the first side 6 of cutter head 2 at a depth of about one-half of the height of the key 56. The key 56 is secured to cutter head 2 by a means, such as threaded screw means 60, extending through the key and into the cutter head 2. The key 56 may be of a generally rectangular configuration with the width gradually tapering narrower toward each end. Key 56 is inserted into a generally rectangular keyway 58 located in the base surface 46 of the cutter ring 40. Alternatively, the key may be located in the base surface of the cutter ring 40 with the keyway located in the first side 6 of the cutter head. The key and keyway arrangement may also be included in the embodiment set forth by Figure 1.

In the assembly of the rotary cutter of Figure 5 the cutter ring 40 is first placed on cutter head 2. The centering disc 24 is then set into the bore of cutter ring 40 and placed into an interference fit with the ball and cage arrangement 22 thus centering the disc 24 on the cutter head 2. The centering disc 24 is then secured to the cutter head by shoulder screws 32 and the force of springs 34 urges the centering disc 24 toward cutter head 2 until the tapering surfaces of the centering disc 24 and the cutter ring 40 are complementary. The rotary cutter is then mounted to a machine spindle by center bolt 62 which along with securing the rotary cutter to the spindle also secures the cutter ring 40 to the cutter head 2.

In the same manner as described with reference to Figure 1, the rotary cutter of Figure 5 may also include the ball and cage arrangement 22 located, prior to assembly, either about projecting portion 16 of the cutter head 2 or in the centering disc 24 next to surface 30. Resilient means, discussed above, may also be included to urge the ball and cage arrangement 22 away from either the cutter head 2 or the centering disc 24 depending upon the initial location of the ball and cage 22. Also, ball and cage retaining means 54, 55 and/or 57, discussed above, may also be included in the embodiment of Figure 5.

The clamping means 52 of Figure 1 or clamping means 66 of Figure 5 may be replaced or supplemented by the clamping means shown in Figures 6-12.

Figure 6 shows an alternative manner of securing the cutter ring 40 to the cutter head 2. In this embodiment, at least one securing means, such as screw 53, extends angularly with respect to the surface 6 of the cutter head 2 from the outside ring surface 48 through the base portion 44 of the cutter ring 40 and into engagement with the cutter head 2.

In Figure 7 the cutter ring 40 is secured to the cutter head 2 by a plurality of tabs 70 (only one of which is shown) projecting from the base portion 44 of the cutter ring 40. Preferably six to eight equidistantly spaced tabs are utilized. The tabs 70 may be formed as part of the base portion 44 or may be separate from the base portion 44 and secured thereto. The tabs 70 extend radially outwardly from the base portion 44 of cutter ring 40. It can be seen that placing the securing means outwardly from the base portion 44 necessarily requires providing a cutter head 2 of a diameter larger than that required for the cutter as shown in Figures 1 or 5 given the same cutter ring diameter. The tabs 70 in Figure 7 comprise a substantially planar upper surface 71 which extends substantially parallel to the base surface 46 of cutter ring 40 and the first side surface 6 of cutter head 2. An undercut 73 may be provided at the intersection of the upper surface 71 and the outside ring surface 48 in order to provide the necessary clearance for a grinding wheel to adequately finish the complete length of the surfaces 71 and 48. A securing means 72, such as a screw, passes through a bore in each tab 70 and engages the cutter head 2. Wide, deep threads in the screws 72 and cutter head 2 allow for position changes of the cutter ring 40 on the cutter head 2 due to dimensional changes of the cutter ring 40.

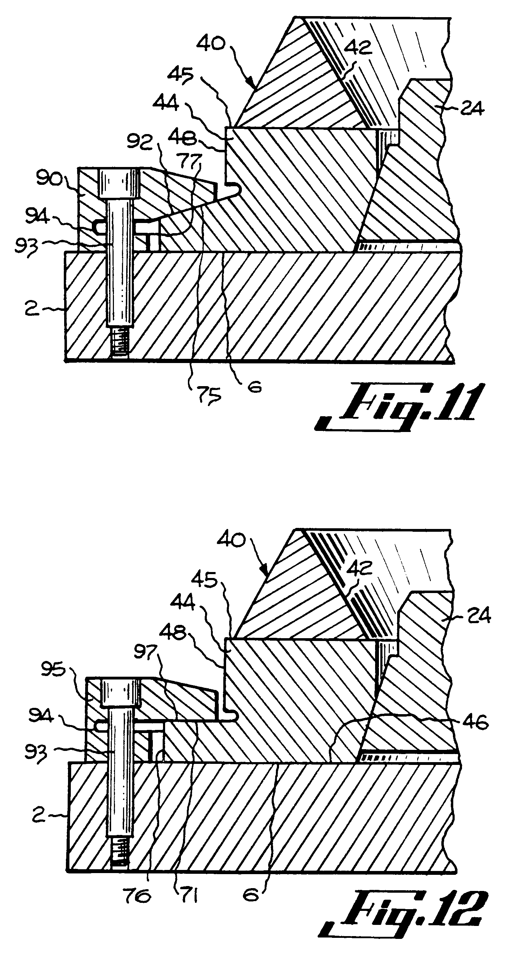

Figure 8 represents a modification of Figure 7 wherein the tabs 74 comprise a substantially planar upper surface 75 which is angularly inclined with respect to the base surface 46 and first side surface 6. The angle of inclination being greater than zero degrees but less than ninety degrees with respect to the base surface 46 of the cutter ring 40.

Figures 9 and 10 illustrate alternative means for securing the tabs to the cutter head. Figure 9 shows a clamp 80 having a clamp head 81 and an angled clamping surface 82 which is complementary to and engages the upper surface 75 of tab 74 for securing the cutter ring 40 to the cutter head 2. The clamp 80 is pulled down by a means, such as a screw 84, which passes through the clamp head 81 and clamp sleeve 83, which is located in a bore in cutter head 2, and threadably engages the cutter head 2.

Figure 10 illustrates a clamp 85 for use with tab 70 having upper surface 71 substantially parallel to base surface 46. Clamp 85 includes a clamp head 86 and clamping surface 87 which is complementary to and engages the upper surface 71 of tab 70. Similar to Figure 9, clamp 85 is pulled down by means, such as screw 84, which extends through clamp head 86 and clamp sleeve 83 and threadably engages cutter head 2.

In Figures 9 and 10 there are a plurality of clamps spaced about the cutter head 2 with the number and position of the clamps corresponding to the number and position of the tabs on the cutter ring. Each tab is engaged by a clamp for securing the cutter ring 40 to the cutter head 2.

Alternative to the tabs 70 or 74, a continuous, circumferentially-extending flange may be utilized which extends completely around and is integral with the base portion 44 of the cutter ring 40. A cross-section of the continuous flange may also be represented by Figures 7 or 8. The flange may have an upper surface which is parallel to the base surface 46, similar to the upper surface 71 in Figure 7, or the flange may have an angled surface similar to the upper surface 75 in Figure 8. The flange may be secured to the cutter head 2 by screw means as shown in Figures 7 or 8, or, the flange may be clamped to the cutter head 2 by a plurality of clamps in a manner as shown by Figures 9 or 10.

The tabs or flange may also be secured to the cutter head 2 by a clamping ring which extends around the cutter ring. Figure 11 shows the cross-section of a clamping ring 90 comprising an angled clamping surface 92 for engaging a complementary angled surface of a tab or flange. The clamping ring 90 is pulled down by a plurality of means, such as a screw 93, spaced about the clamping ring and extending therethrough and into cutter head 2. Slot 94 allows the clamping ring 90 to be deformed slightly as means 93 is tightened thus permitting clamping forces to be directed primarily to the clamping surface 92.

Figure 12 shows another clamping ring 95 having a clamping surface 97 for engaging a complementary surface of a tab or flange having an upper clamping surface extending parallel to base surface 46. The clamping ring 95 also includes a slot 94 and is pulled down by a plurality of means, such as a screw 93, spaced about the clamping ring and extending therethrough and threadably engaging cutter head 2.

Figures 11 and 12 may also represent the cross-section of one of a plurality of clamps spaced about the cutter head 2. The individual clamps may be spaced such that the number and position of the clamps correspond to the number and position of tabs on the cutter ring 40. Alternatively, the clamps as represented by Figures 11 or 12 may also engage a continuous flange about a cutter ring 40 for securing the cutter ring 40 to the cutter head 2.

In cutter rings having outwardly extending tabs or a continuous flange as shown in Figures 7 and 8 it is not possible to have proof surfaces 47 or 49 as shown in Figures 1-6. In these embodiments the outer surfaces of the tabs or flange are precisely formed and serve as the proof surfaces. In Figure 7, surfaces 71 and 76 are utilized as proof surfaces while in Figure 8, surfaces 75 and 77 function as proof surfaces. Although surface 75 is oriented angularly with respect to the axis of rotation, it may still serve as a proof surface.

In Figures 9-12 the tabs or flanges are not easily accessible due to the presence of the clamps 80 or 85 or clamping rings 90 or 95 and therefore can not function as proof surfaces. In these instances, outer cutter ring surface 48 is selected as a proof surface extending parallel to the axis of rotation. Cutter ring base portion 44 is formed to be wider than the widest portion of the stock removing surface 42 such that an outer shoulder portion 45 is formed. This outer shoulder portion 45 is perpendicular to the axis of rotation of the cutter ring and serves as the other proof surface.

The rotary cutter of the present invention represents a rapid and less complicated manner to assemble arid disassemble a rotary cutter. The present invention also represents a means to ensure that the stock removing surfaces of the rotary cutter rotate true about the axis thereof even in situations where cutter ring diameters may vary, such as due to temperature changes causing thermal expansion or contraction of the cutter ring.

## Claims

1. Rotary cutter for cutting gears, couplings and the like, said cutter comprising:
a disc-shaped cutter head (2), said cutter head having an axis of rotation (12) and at least one opening (10) therethrough,
a cutter ring (40) comprising at least one stock removing surface (42) with a circular base portion (44) said base portion having a base surface (46) located adjacent said cutter head (2),
a disc-shaped centering disc (24) having at least one opening (26) aligned with said at least one opening (10) in said cutter head, said centering disc having a tapered outer edge surface (28) concentric with said axis (12), and the cutter ring (40) having a tapered inside ring surface (50), said tapered outer edge surface (28) of said centering disc (24) abutting against and complementary with said tapered inside ring surface (50) of said cutter ring (40) whereby said cutter ring is centered on said cutter head (2)
characterized in that it also comprises:
a ball and cage arrangement (22) located on said cutter head about and concentric with said axis (12),
the centering disc (24) being located in an interference fit about said ball and cage arrangement (22), thereby enabling said centering disc and cutter ring to rotate true about said axis (12).

2. Rotary cutter according to claim 1 wherein said tapered edge surface (28) of said centering disc and said tapered inside surface (50) of said cutter ring are tapered outwardly in a direction toward said cutter head (2).

3. Rotary cutter according to claim 2 wherein the amount of taper is 2 degrees to 20 degrees.

4. Rotary cutter according to claim 1, claim 2 or claim 3 wherein the cutter head (2) has an outer edge surface (4) and first (6) and second (8) sides, and includes at least one central opening (10) through which an attachment means may pass for securing said rotary cutter to a cutting machine, said central opening encircling an axis of rotation (12), said first side including a projecting portion (16) encircling said central opening, said projecting portion having an inner surface (18) and an outer surface (20) with at least said outer surface (20) being concentric with said axis (12),
the ball and cage arrangement (22) extending about and in contact with said outer surface (20) of said projecting portion (16), to be concentric with said axis (12),
and said centering disc having at least one central opening (26) and having a recessed region comprising a circular inner recess wall surface (30) located concentric with said axis (12) and about and in the interference fit with said ball and cage arrangement (22).

5. Rotary cutter according to claim 1 wherein said tapered edge surface (28) of said centering disc and said tapered inside surface (50) of said cutter ring being tapered inwardly in a direction toward said cutter head (2).

6. Rotary cutter according to any one of the preceding claims further including resilient means (34) located between said cutter head (2) and said centering disc (24) thereby urging said centering disc to be spaced from said cutter head.

7. Rotary cutter according to claim 1 wherein said cutter ring (40) further comprises a plurality of mounting tabs (70,74) extending radially outwardly from said outside ring surface, said cutter ring being secured to said cutter head by securing means (72,80,85) engaging said tabs and said cutter head.

8. Rotary cutter according to claim 1 wherein said cutter ring (40) further comprises a continuous circumferential flange extending radially outwardly from said outside ring surface, said flange comprising a substantially planar upper surface, said cutter ring being secured to said cutter head by securing means engaging said flange and said cutter head.

9. Rotary cutter according to claim 1 or claim 2 further including at least one key located in one of said first side of said cutter head or said cutter ring base surface and at least one keyway located in the other of said first side of said cutter head or said cutter ring base surface.

10. Rotary cutter according to claim 1 or claim 2 further comprising means to prevent removal of said ball and cage arrangement from about said projecting portion during disassembly of said rotary cutter.

11. Rotary cutter according to claim 1 or claim 2 further comprising means to prevent removal of said ball and cage arrangement from within said centering disc during disassembly of said rotary cutter.

12. Rotary cutter according to claim 1 or claim 2 wherein the portion of the cage of said ball and cage arrangement located between the balls and the centering disc is lengthened whereby excessive creeping of the ball and cage arrangement along said projecting portion and loss of contact therewith is prevented.

## Patentansprüche

1. Rotierendes Schneidwerkzeug bzw. -messer zum Schneiden von Zahnrädern, Kupplungen u.dgl., umfassend:
einen scheibenförmigen Schneidwerkzeugkopf (2), der eine Rotationsachse (12) und zumindest eine hindurchgehende Öffnung (10) aufweist,
einen Schneidwerkzeugring (40), umfassend zumindest eine Materialentfernungsfläche (42) mit einem kreisrunden Basisabschnitt (44), der eine Basisfläche (46) besitzt, die sich angrenzend zum Schneidwerkzeugkopf (2) befindet,
wobei eine scheibenförmige Zentrierscheibe (24) zumindest eine Öffnung (26) aufweist, die mit der zumindest einen Öffnung (10) im Schneidwerkzeugkopf ausgerichtet ist, die Zentrierscheibe eine sich verjüngende Außenkantenfläche (28) besitzt, die konzentrisch zur Achse (12) ist, der Schneidwerkzeugring (40) eine sich verjüngende Innenringfläche (50) aufweist und die sich verjüngende Außenkantenfläche (28) der Zentrierscheibe (24) gegen die sich verjüngende Innenringfläche (50) des Schneidwerkzeugrings (40) anliegt und komplementär zu dieser ist, wodurch der Schneidwerkzeugring auf dem Schneidwerkzeugkopf (2) zentriert wird,
dadurch gekennzeichnet, daß es weiters folgendes umfaßt:
eine Kugel-Käfig-Anordnung (22), die auf dem Schneidwerkzeugkopf um und konzentrisch zur Achse (12) angeordnet ist,
wobei die Zentrierscheibe (24) in einem Preßsitz um die Kugel-Käfig-Anordnung (22) positioniert ist, wodurch sich die Zentrierscheibe und der Schneidwerkzeugring ausgerichtet um die Achse (12) drehen können.

2. Rotierendes Schneidwerkzeug nach Anspruch 1, worin die sich verjüngende Kantenfläche (28) der Zentrierscheibe und die sich verjüngende Innenfläche (50) des Schneidwerkzeugrings in einer Richtung hin zum Schneidwerkzeugkopf (2) nach außen konisch zulaufend sind.

3. Rotierendes Schneidwerkzeug nach Anspruch 2, worin das Verjüngungsausmaß von 2 bis 20° reicht.

4. Rotierendes Schneidwerkzeug nach Anspruch 1, 2 oder 3, worin der Schneidwerkzeugkopf (2) eine Außenkantenfläche (4) sowie eine erste (6) und zweite (8) Seite besitzt und zumindest eine zentrale Öffnung (10) enthält, durch die ein Befestigungsmittel ragen kann, um das rotierende Schneidwerkzeug an einer Schneidmaschine anzubringen, wobei die zentrale Öffnung eine Rotationsachse (12) umgibt, die erste Seite einen herausragenden Abschnitt (16) aufweist, der um die zentrale Öffnung umgibt, der herausragende Abschnitt eine Innenfläche (18) und eine Außenfläche (20) aufweist und zumindest die Außenfläche (20) zur Achse (12) konzentrisch ist,
wobei sch die Kugel-Käfig-Anordnung (22) um die Außenfläche (20) des herausragenden Abschnitts (16) herum erstreckt und in Kontakt mit dieser steht, um konzentrisch zur Achse (12) zu sein,
und wobei die Zentrierscheibe, die zumindest eine zentrale Öffnung (26) und einen ausgenommenen Bereich aufweist, eine kreisrunde Innenausnehmungswandfläche (30) umfaßt, die konzentrisch zur Achse (12) sowie um die Kugel-Käfig-Anordnung (22) herum und im Preßsitz mit ihr positioniert ist.

5. Rotierendes Schneidwerkzeug nach Anspruch 1, worin die sich verjüngende Kantenfläche (28) der Zentrierscheibe und die sich verjüngende Innenfläche (50) des Schneidwerkzeugrings sich nach innen in einer Richtung hin zum Schneidwerkzeugkopf (2) verjüngen.

6. Rotierendes Schneidwerkzeug nach einem der vorhergehenden Ansprüche, weiters umfassend elastische Mittel (34), die zwischen dem Schneidwerkzeugkopf (2) und der Zentrierscheibe (24) angeordnet sind, wodurch die Zentrierscheibe in einen Abstand zum Schneidwerkzeugkopf gedrängt wird.

7. Rotierendes Schneidwerkzeug nach Anspruch 1, worin der Schneidwerkzeugring (40) weiters eine Vielzahl an Montagenasen (70, 74) umfaßt, die sich radial aus der Außenringfläche erstrecken, wobei der Schneidwerkzeugring durch Befestigungsmittel (72, 80, 85) am Schneidwerkzeugkopf befestigt ist, die in die Nasen und den Schneidwerkzeugkopf eingreifen.

8. Rotierendes Schneidwerkzeug nach Anspruch 1, worin der Schneidwerkzeugring (40) weiters einen fortlaufenden Umfangsflansch umfaßt, der sich radial aus der Außenringfläche erstreckt und eine im wesentlichen planare obere Fläche umfaßt, wobei der Schneidwerkzeugring durch Befestigungsmittel am Schneidwerkzeugkopf befestigt ist, die in den Flansch und den Schneidwerkzeugkopf eingreifen.

9. Rotierendes Schneidwerkzeug nach Anspruch 1 oder 2, weiters umfassend zumindest einen Keil entweder in der ersten Seite des Schneidwerkzeugkopfes oder der Schneidwerkzeugringbasisfläche und zumindest eine Keilnut in der anderen ersten Seite des Schneidwerkzeugkopfs oder der Schneidwerkzeugringbasisfläche.

10. Rotierendes Schneidwerkzeug nach Anspruch 1 oder 2, weiters umfassend Mittel, um während des Auseinandernehmens des rotierenden Schneidwerkzeugs das Entfernen der Kugel-Käfig-Anordnung vom herausragenden Abschnitt zu verhindern.

11. Rotierendes Schneidwerkzeug nach Anspruch 1 oder 2, weiters umfassend Mittel, um während des Auseinandernehmens des rotierenden Schneidwerkzeugs das Entfernen der Kugel-Käfig-Anordnung aus der Zentrierscheibe zu verhindern.

12. Rotierendes Schneidwerkzeug nach Anspruch 1 oder 2, worin der Käfigabschnitt der Kugel-Käfig-Anordnung, der zwischen den Kugeln und der Zentrierscheibe positioniert ist, verlängert ist, wodurch ein übermäßiges Kriechen der Kugel-Käfig-Anordnung entlang des herausragenden Abschnitts sowie ein Kontaktverlust mit ihm verhindert werden.

## Revendications

1. Outil de coupe rotatif pour tailler des engrenages, des accouplements et analogues, ledit outil de coupe comportant :
une tête porte-lames (2) en forme de disque, ladite tête porte-lames ayant un axe de rotation (12) et au moins une ouverture (10) à travers celle-ci,
un anneau de coupe (40) comportant au moins une surface d'enlèvement de matière (42) avec une portion de base circulaire (44), ladite portion de base ayant une surface de base (46) située pour être adjacente à ladite tête porte-lames (2),
un disque de centrage (24) en forme de disque ayant au moins une ouverture (26) alignée avec au moins une ouverture (10) précitée dans ladite tête porte-lames, ledit disque de centrage ayant une surface de bord extérieure conique (28) concentrique avec ledit axe (12), et l'anneau de coupe (40) ayant une surface annulaire intérieure conique (50), ladite surface de bord extérieure conique (28) dudit disque de centrage (24) butant contre et étant complémentaire avec ladite surface annulaire intérieure conique (50) dudit anneau de coupe (40) par quoi ledit anneau de coupe est centré sur ladite tête porte-lames (2),
caractérisé en ce qu'il comporte également :
un agencement à billes et à cage (22) se trouvant sur ladite tête porte-lames autour et concentrique avec ledit axe (12),
le disque de centrage (24) se trouvant suivant un joint à ajustement serré autour dudit agencement à billes et à cage (22) en permettant ainsi auxdits disque de centrage et anneau de coupe de tourner véritablement autour dudit axe (12).

2. Outil de coupe rotatif selon la revendication 1, dans lequel ladite surface de bord conique (28) dudit disque de centrage et ladite surface intérieure conique (50) dudit anneau de coupe sont coniques vers l'extérieur dans une direction vers ladite tête porte-lames (2).

3. Outil de coupe rotatif selon la revendication 2, dans lequel la valeur de conicité est de 2 degrés à 20 degrés.

4. Outil de coupe rotatif selon la revendication 1, la revendication 2 ou la revendication 3, dans lequel la tête porte-lames (2) a une surface de bord extérieure (4) et des premier (6) et deuxième (8) côtés, et comporte au moins une ouverture centrale (10) à travers laquelle un moyen de fixation peut passer pour fixer ledit outil de coupe rotatif à une machine de coupe, ladite ouverture centrale encerclant un axe de rotation (12), ledit premier côté incluant une portion en saillie (16) encerclant ladite ouverture centrale, ladite portion en saillie ayant une surface intérieure (18) et une surface extérieure (20), au moins ladite surface extérieure (20) étant concentrique avec ledit axe (12),
l'agencement à billes et à cage (22) s'étendant autour et en contact avec ladite surface extérieure (20) de ladite portion en saillie (16) pour être concentrique avec ledit axe (12),
et ledit disque de centrage ayant au moins une ouverture centrale (26) et ayant une région évidée comportant une surface de paroi d'évidement intérieure circulaire (30) qui est située pour être concentrique avec ledit axe (12) et autour et suivant un joint à ajustement serré avec ledit agencement à billes et à cage (22).

5. Outil de coupe rotatif selon la revendication 1, dans lequel ladite surface de bord conique (28) dudit disque de centrage et ladite surface intérieure conique (50) dudit anneau de coupe sont coniques vers l'intérieur dans une direction vers ladite tête porte-lames (2).

6. Outil de coupe rotatif selon l'une des revendications précédentes, incluant en outre un moyen élastique (34) situé entre ladite tête porte-lames (2) et ledit disque de centrage (24) en sollicitant ainsi ledit disque de centrage au loin de ladite tête porte-lames.

7. Outil de coupe rotatif selon la revendication 1, dans lequel ledit anneau de coupe (40) comporte en outre une pluralité de pattes de montage (70, 74) s'étendant radialement vers l'extérieur depuis ladite surface annulaire extérieure, ledit anneau de coupe étant fixé à ladite tête porte-lames par un moyen de fixation (72, 80, 85) venant en prise avec les pattes et ladite tête porte-lames.

8. Outil de coupe rotatif selon la revendication 1, dans lequel ledit anneau de coupe (40) comporte en outre un rebord continu circonférentiel s'étendant radialement vers l'extérieur depuis ladite surface annulaire extérieure, ledit rebord comportant une surface supérieure sensiblement plane, ledit anneau de coupe étant fixé à ladite tête porte-lames par un moyen de fixation venant en prise avec ledit rebord et ladite tête porte-lames.

9. Outil de coupe rotatif selon la revendication 1 ou la revendication 2, incluant en outre au moins une clavette située soit dans ledit premier côté de ladite tête porte-lames soit dans ladite surface de base de l'anneau de coupe et au moins un logement de clavette situé dans l'autre dudit premier côté de ladite tête porte-lames ou de ladite surface de base de l'anneau de coupe.

10. Outil de coupe rotatif selon la revendication 1 ou la revendication 2, comportant en outre un moyen pour empêcher le retrait dudit agencement à billes et à cage de ladite portion en saillie pendant le démontage dudit outil de coupe rotatif.

11. Outil de coupe rotatif selon la revendication 1 ou la revendication 2, comportant en outre un moyen pour empêcher le retrait dudit agencement à billes et à cage dudit disque de centrage pendant le démontage dudit outil de coupe rotatif.

12. Outil de coupe rotatif selon la revendication 1 ou la revendication 2, dans lequel la portion de la cage dudit agencement à billes et à cage se trouvant entre les billes et le disque de centrage est allongée par quoi un glissement excessif de l'agencement à billes et à cage le long de ladite portion en saillie et la perte de contact avec celle-ci sont empêchés.
